Europäisches Patentamt

European Patent Office

Office européen des brevets

(19)

(11) Veröffentlichungsnummer: **0 217 242**
**B1**

(12) **EUROPÄISCHE PATENTSCHRIFT**

(45) Veröffentlichungstag der Patentschrift:
07.02.90

(51) Int. Cl.⁴: **B23Q 17/09**, G01N 3/58

(21) Anmeldenummer: **86112931.0**

(22) Anmeldetag: **18.09.86**

(54) **Verfahren und Einrichtung zum Erkennen von Grenzverschleiss und/oder Schneidenbruch bei Werkzeugen.**

(30) Priorität: **04.10.85 DE 3535474**

(43) Veröffentlichungstag der Anmeldung:
**08.04.87 Patentblatt 87/15**

(45) Bekanntmachung des Hinweises auf die Patenterteilung:
**07.02.90 Patentblatt 90/6**

(84) Benannte Vertragsstaaten:
**DE FR GB SE**

(56) Entgegenhaltungen:
**DE-A- 2 220 237**

(73) Patentinhaber: **Fried. Krupp Gesellschaft mit beschränkter Haftung, Altendorfer Strasse 103, D-4300 Essen 1(DE)**

(72) Erfinder: **Mayer, Kurt, Dr., Kantorie 58, D-4300 Essen 1(DE)**

(74) Vertreter: **Vomberg, Friedhelm, Dipl.-Phys., Graf-Recke-Strasse 231, D-4000 Düsseldorf 1(DE)**

ACTORUM AG

## Beschreibung

Die vorliegende Erfindung bezieht sich auf ein Verfahren und ein Werkzeug mit einer Einrichtung zum Erkennen von Grenzverschleiß und/oder Schneidenbruch mit mindestens einer in den Schneidwerkstoff oder in den Verschleißwerkstoff, z.B. in die Schneidplatte eingebetteten isolierten Leiterbahn, die mit einer Spannungsquelle in Verbindung steht und Teil eines Schaltkreises bildet, der zum Auslösen eines Signals zum Abbrechen des Bearbeitungsvorganges dient.

Zum Früherkennen von Schneidenbrüchen ist für elektrisch nichtleitende Schneidkeramik bereits ein System vorgeschlagen worden, bei dem Risse im Bereich der Nebenschneiden dadurch erkannt werden sollen, daß sie zur Zerstörung von auf den Nebenfreiflächen der Werkzeuge aufgedampften dünnen Leiterbahnen einen Stromkreis unterbrechen, wodurch der Bearbeitungsvorgang abgebrochen wird. Dieses System ist bisher jedoch nur versuchsweise verwendet worden. In der Praxis hat es sich nicht durchsetzen können, weil es erhebliche Mängel aufweist. In der Fertigungstechnik sind elektrisch leitende Werkstoffe, ebenso wie elektrisch nichtleitende Werkstoffe, mit elektrisch leitenden oder mit elektrisch nichtleitenden Schneidstoffen trocken oder mit elektrisch leitenden oder nichtleitenden Kühl- bzw. Schmiermitteln zu bearbeiten. Es ist deshalb nicht vorhersehbar, ob und wann bei dem bekannten System ein durch den Stromkreis fließender Strom durch Rißbildung tatsächlich unterbrochen wird. Es kann nämlich beispielsweise durch Werkstoffpartikel oder Kühlschmiermittel oder durch Teilchen eines elektrisch leitenden Schneidstoffs und auch durch Werkstückberührung zu einer elektrisch leitenden Brückenbildung über die Rißstellung kommen, so daß trotz Erreichen des Grenzverschleißes bzw. bei einem Schneidenbruch das Signal zum Abbrechen des Bearbeitungsvorganges nicht ausgelöst wird.

Die vorliegende Erfindung bezweckt, diesen Mangel zu beseitigen und eine Einrichtung zu schaffen, die auch dann sicher das zum Abbruch des Bearbeitungsvorganges erforderliche Signal liefert, wenn es aus irgendwelchen Gründen zu einer Überbrückung einer Unterbrechung der Leiterbahn kommt.

Diese Aufgabe wird mit dem in den Ansprüchen 1 und 2 aufgeführten Verfahren bzw. Werkzeug gelöst. Zum Beispiel wird nach der Erfindung vorgeschlagen, zwei gegeneinander sowie nach außen und bei elektrisch leitendem Substrat auch gegen das Substrat selbst isolierte Leiterbahnen mit dünnen Querschnitten parallel nebeneinander oder übereinander anzuordnen und über Kontaktpunkte so an eine Spannungsquelle anzuschließen, daß die eine Leiterbahn Teil eines geschlossenen und die zweite Leiterbahn Teil eines offenen Stromkreises bildet und das zum Abbruch des Bearbeitungsvorganges dienende Signal dann entsteht, wenn entweder der geschlossene Stromkreis durch Verschleiß oder Schneidenbruch unterbrochen oder der offene Stromkreis nach dem Abtragen der Isolierschicht durch Verschleiß oder bei Bruch durch Brückenbildung geschlossen wird.

Weiterbildungen des erfindungsgemäßen Werkzeuges werden in den Ansprüchen 3 bis 16 beschrieben.

Die Leiterbahnen können bei spanabhebenden Werkzeugen in den Freiflächen oder auch an den Spanflächen entlang der Hauptschneiden, den Nebenschneiden oder den Haupt- und den Nebenschneiden für jede Schneide oder jedes Schneidenpaar getrennt angeordnet werden. Erfindungsgemäß können aber auch mehrere mit voneinander unabhängigen Stromkreisen verbundene Leiterpaare entlang einer Schneide angeordnet sein. Die verschiedenen Stromkreise können zum Schalten verschiedener Antriebe der Bearbeitungsmaschine benutzt werden, z.B. zum Schalten des Vorschubs oder des Hauptantriebs.

Solche Kombinationen von Leiterbahnpaaren können benutzt werden, um beispielsweise mit einem Leiterbahnpaar die Arbeitswerte und damit die Werkzeugbelastung zu vermindern, während erst durch einen im zweiten Leiterbahnpaar entstehenden Impuls schließlich der Bearbeitungsvorgang abgebrochen wird, wenn bis zu seinem Auftreten das Werkstück noch nicht fertig bearbeitet worden ist.

Für die Verwendung in Einrichtungen zur Durchführung des Verfahrens nach der Erfindung eignen sich insbesondere Wendeschneidplatten aus Hartstoffen. Sind die Wendeschneidplatten aus einem elektrisch leitenden Material, z.B. aus Hartmetall, so kann die Platte zunächst mit einer sehr dünnen elektrisch nichtleitenden keramischen Schicht, z.B. aus Aluminiumoxid oder Siliziumnitrid, überzogen werden. Dies ist bekanntlich durch Beschichten mit Hilfe des sogenannten PVD-(Physical Vapour Deposition) oder CVD-(Chemical Vapour Deposition)-Verfahrens möglich. Auf die gleiche Weise kann man auch die Leiterbahnen dadurch herstellen, daß eine Schicht aus leitendem Werkstoff, z.B. aus Titancarbid, Titancarbonitrid oder Titannitrid, aufgebracht wird. Diese Schicht kann begrenzt auf die dafür vorgesehenen Stellen oder auf die ganze Fläche aufgebracht werden. Wird die Schicht auf die ganze Fläche aufgebracht, so entstehen die Leiterbahnen durch anschließendes Ausarbeiten. Die Isolierschicht nach außen kann wiederum durch eine mit Hilfe eines der obengenannten Verfahren niedergeschlagenen zweiten Keramikschicht bestehen. Zum Auftragen von Isolierschichten und Leiterbahnen können aber auch galvanische Verfahren oder die Siebdrucktechnik angewandt werden. Wichtig ist dabei, daß die aufzutragenden Isolierschichten in ihrer Verschleißfestigkeit mindestens der des verwendeten Schneidstoffes entsprechen, möglichst diesem aber überlegen sind. Diese Forderung ist bei Hartmetall oder Keramik als Schneidwerkstoff bei der Verwendung von nichtleitenden Keramikschichten erfüllt.

Aber auch sämtliche anderen bekannten Hartstoffe sind in geeigneter Zuordnung zur Herstellung nichtleitender, d.h. isolierender Schichten und zur Herstellung der Leiterbahnen von Einrichtungen zur Durchführung des Verfahrens geeignet.

In der Zeichnung sind schematisch Ausführungsbeispiele des Erfindungsgegenstandes dargestellt, und zwar zeigt

Fig. 1a eine Wendeschneidplatte mit zwei elektrischen Leiterbahnen und den zugehörigen elektrischen Schaltkreisen,

Fig. 1b eine andere Ausführung der Schaltkreise nach Fig. 1a,

Fig. 2 eine weitere Variante der Schaltkreise nach Fig. 1a und 1b mit vier elektrischen Leiterbahnen,

Fig. 3 die Anordnung der Leiterbahnen nach der Erfindung bei einem vierseitig verwendbaren Schneideinsatz,

Fig. 4a eine Wendeschneidplatte aus Hartmetall mit zwei nebeneinander angeordneten Leiterbahnen je Schneide,

Fig. 4b eine Wendeschneidplatte aus Hartmetall mit zwei übereinander angeordneten Leiterbahnen je Schneide,

Fig. 5a bis 5h verschiedene unterschiedliche Anordnungen der Leiterbahnen in Schneidplatten aus Hartmetall bei elektrisch leitenden und elektrisch nichtleitenden Substraten.

In Fig. 1a ist mit 1 eine Wendeschneidplatte mit Leiterbahnen 2, 3, z.B. aus Titannitrid, dargestellt. Diese Leiterbahnen stehen über Kontaktpunkte 4, 5, 6 mit den Schaltkreisen 7 bzw. 8 in Verbindung, die von der Spannungsquelle 9 gespeist werden. In den Schaltkreisen 7, 8 sind Schaltelemente 10 bzw. 11 vorgesehen, über die die Maschinensteuerung 12 angesprochen wird.

Die dargestellte Schaltung zeigt, daß die Leiterbahn 2 zu dem offenen Stromkreis 7 und die Leiterbahn 3 zu dem geschlossenen Stromkreis 8 gehört. Sie zeigt ferner, daß über die Schaltelemente 10 bzw. 11 die Maschinensteuerung sowohl dann angesprochen wird, wenn der offene Schaltkreis 7 durch Zustandekommen einer leitenden Verbindung zwischen den Leiterbahnen 2 und 3 geschlossen wird, als auch, wenn durch Unterbrechen der Leiterbahn 3 der geschlossene Stromkreis 8 unterbrochen wird.

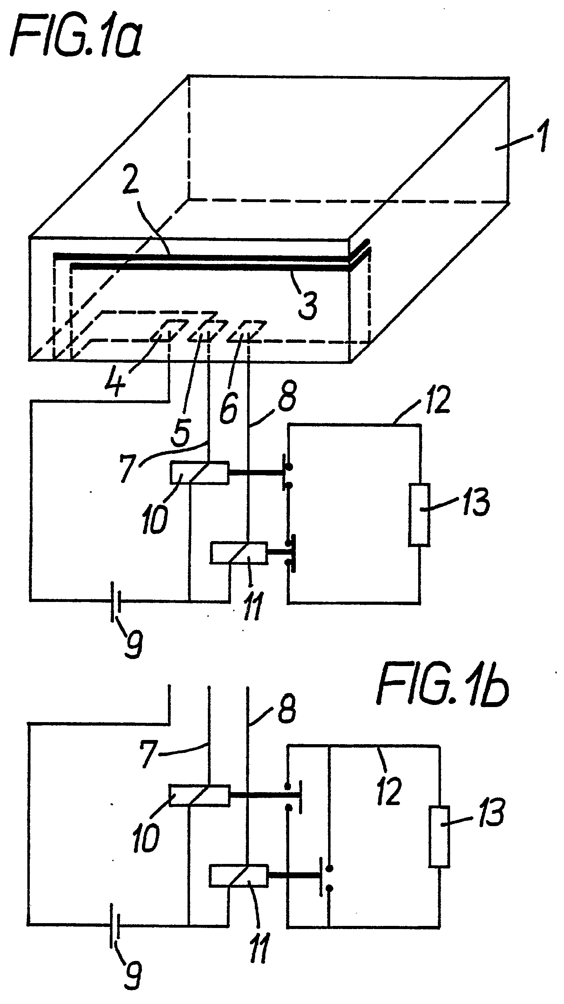

Das in Fig. 1b dargestellte Schaltschema zeigt eine Variante zu der Schaltung nach Fig. 1a. Bei ihr wird das Signal für die Steuerung nicht durch Öffnen der Schaltelemente 10, 11, sondern durch Schließen derselben ausgelöst.

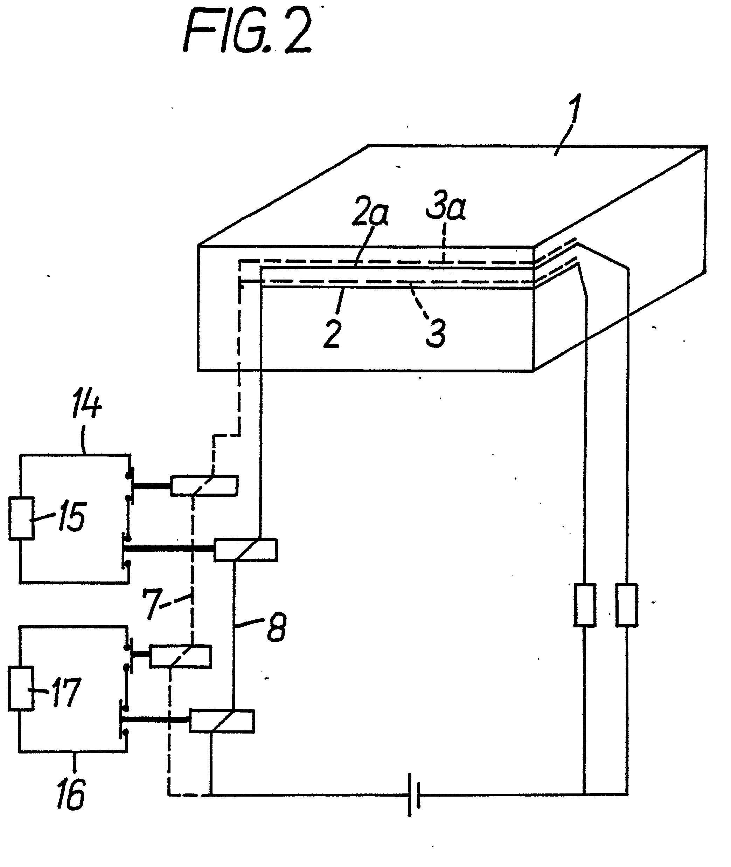

Fig. 2 zeigt eine Einrichtung mit einer Mehrfachanordnung von Leiterbahnen, die auf unterschiedliche Regelkreise einwirken. Dabei sind mit 2 und 3 sowie mit 2a und 3a Leiterbahnen dargestellt. Beispielsweise sind diese in aus elektrischnichtleitenden Werkstoffen, beispielsweise aus Aluminiumoxid, bestehenden Schichten eingebettet, die auf dem Hartmetallgrundkörper einer Wendeschneidplatte 1 aufgebracht sind. Die Leiterbahnen 3 und 3a bilden dabei jeweils Teile offener Schaltkreise 7, die Leiterbahnen 2 und 2a jeweils Teile geschlossener Schaltkreise 8. Mit einer derartigen Einrichtung können Schaltimpulse unterschiedlicher Stärke erzeugt werden, die beispielsweise über den Stromkreis 14 oder 16 unterschiedliche Impulse an die Maschinensteuerung 15 bzw. 17 geben.

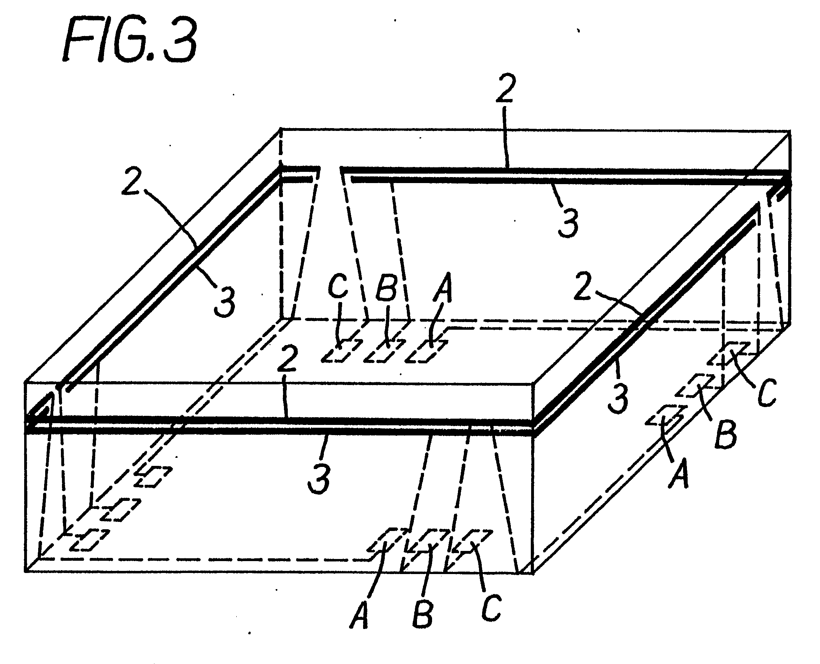

In Fig. 3 ist die Anordnung der Leiterbahnen innerhalb einer vierschneidigen Wendeschneidplatte einschließlich ihrer Verbindungen zu den erforderlichen Außenkontakten dargestellt. Die Leiterbahnen 2 bzw. 3 sind isoliert zu den Kontakpunkten A, B, C geführt, deren Gegenkontakte im Werkzeughalter in einem Adapter oder in einem Zwischenstück so angeordnet sind, daß sie jeweils Kontakt zu drei zusammengehörenden Kontaktflächen für die Schneide in Arbeitsstellung in der Wendeschneidplatte erhalten. Wenn die Wendeschneidplatte gedreht wird, um eine neue Schneide in Arbeitsposition zu bringen, kommen jeweils die entsprechenden neuen Kontakte der Wendeschneidplatte in Anschlußposition. Je ein Paar der Leiterbahnen 2 und 3 erstrecken sich beispielsweise über fast die ganze Länge der Hauptschneide sowie über einen kleinen Bereich der Nebenschneide. Die Verbindungen der Leiterbahnen 2 und 3 mit den Kontaktpunkten A, B, C, die in gleicher Weise hergestellt sein können wie die Leiterbahnen selbst, sind in Fig. 3 mit strichpunktierten Linien dargestellt.

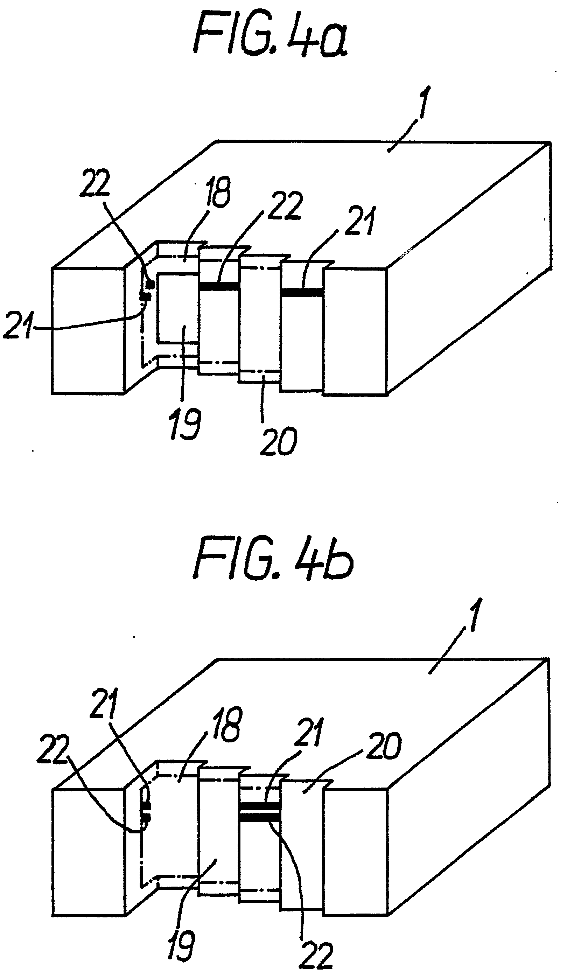

Die Fig. 4a und 4b zeigen den Aufbau einer Wendeschneide 1 aus Hartmetall mit den erfindungsgemäßen Leiterbahnen in den aus keramischem elektrisch nichtleitendem Werkstoff bestehenden Isolier- und Deckschichten. Dabei ist das aus Hartmetall bestehende Substrat mit 18 bezeichnet, auf das mit Hilfe des sogenannten CVD- oder PVD-Verfahrens eine erste Schicht 19 aus Aluminiumoxid aufgebracht ist. Auf diese Schicht wiederum ist in gleicher Weise eine weitere Deckschicht aus Aluminiumoxid 20 aufgetragen, nachdem zuvor auf die Schicht 19 nebeneinander in gleicher Höhe die metallischen Leiterbahnen 21 und 22 aus Titannitrid aufgebracht worden sind. Die in Fig. 4b dargestellte Variante unterscheidet sich von der Ausführungsform in Fig. 2a dadurch, daß die Leiterbahnen 21 und 22 nicht nebeneinander, sondern übereinander angeordnet sind.

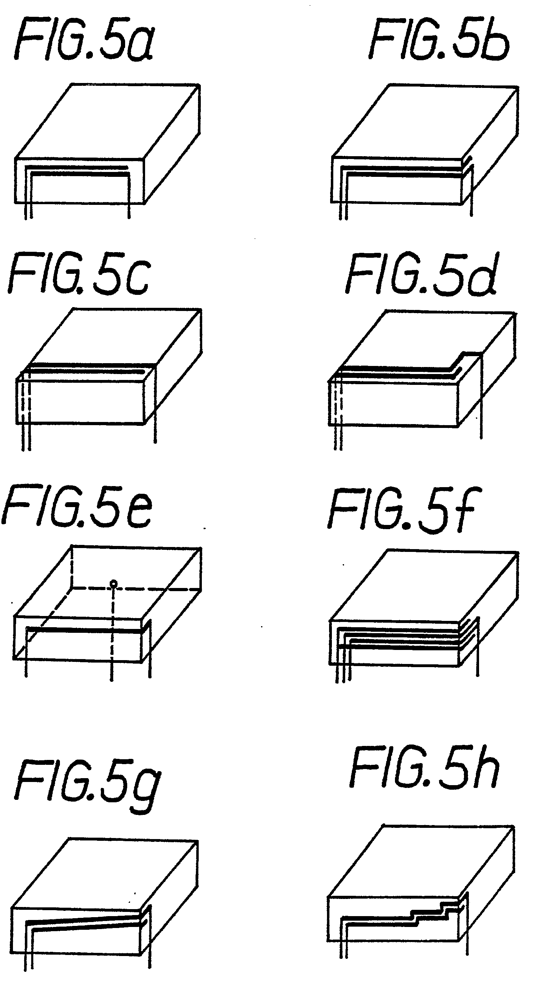

In den Fig. 5a bis 5h sind unterschiedliche Anordnungen der Leiterbahnen in einer Wendeschneidplatte dargestellt, und zwar in vereinfachter Darstellung.

Bei Wendeschneidplatten können die in den Fig. 5a bis 5h dargestellten Leiterbahnen selbstverständlich jeweils auch an sämtlichen Schneiden angebracht sein.

Fig. 5a zeigt die parallele Anordnung von Leiterbahnpaaren an der Freifläche einer Hauptschneide, Fig. 5b eine entsprechende Anordnung, bei der sich jedoch die Leiterbahnen auch über die Nebenschneide erstrecken.

Im Ausführungsbeispiel nach Fig. 5c ist das Leiterbahnpaar in der Spanfläche parallel zur Hauptschneide angeordnet, in Fig. 5d parallel zu den Haupt- und Nebenschneiden.

Die Ausführungsform nach Fig. 5e zeigt die Anordnung einer Leiterbahn bei Verwendung eines elektrisch leitenden Substrats. Hier kann der offene Stromkreis über das Substrat geleitet werden, dem der geschlossene Stromkreis durch eine aus isolierendem Werkstoff bestehende Schicht getrennt gegenüberliegt.

Fig. 5f zeigt die Anordnung von zwei Leiterbahnpaaren je Schneide, um abgestufte Signale zur Steuerung unterschiedlicher Arbeitswerte zu erhalten.

Bei der Ausführungsform nach Fig. 5g sind die Leiterbahnen schräg zur Hauptschneide, in Fig. 5h gestuft zu dieser angeordnet. Diese beiden Ausführungsformen haben den Vorteil, daß in Abhängigkeit von Schneidenort unterschiedlicher Grenzverschleiß bis zum Auslösen des Signals festgelegt werden kann.

## Patentansprüche

1. Verfahren zum Erkennen von Grenzverschleiß und/oder Schneidenbruch bei Werkzeugen mit mindestens einer in den Schneidwerkstoff oder in den Verschleißwerkstoff, z.B. in die Schneidplatte (1), eingebetteten isolierten Leiterbahn (2, 3), die mit einer Spannungsquelle (9) in Verbindung steht und Teil eines Schaltkreises (7, 8) bildet, der zum Auslösen eines Signals zum Abbrechen des Bearbeitungsvorganges dient, dadurch gekennzeichnet, daß mindestens ein Leiterbahnenpaar (2, 3) vorgesehen ist, dessen Leiterbahnen (2, 3) gegeneinander sowie nach außen und bei elektrisch leitendem Substrat auch gegen das Substrat selbst isoliert sind und von dem bzw. denen die jeweils eine Leiterbahn (3) Teil eines geschlossenen Schaltkreises (8) bildet, während die andere Teil (2) eines offenen Schaltkreises (7) bildet, und daß das zur Verminderung der Werkzeugbelastung und/oder zum Abbruch des Arbeitsvorganges dienende Signal dann entsteht, wenn entweder die Leiterbahn im geschlossenen Schaltkreis unterbrochen oder die Leiterbahn im offenen Schaltkreis nach dem Abtragen der Isolierschicht oder bei Bruch durch Brückenbildung geschlossen wird.

2. Werkzeug mit einer Einrichtung zum Erkennen von Grenzverschleiß und/oder Schneidenbruch mit mindestens einer in den Schneidwerkstoff, insbesondere eine Schneidplatte (1) eingebetteten isolierten Leiterbahn (2, 3), die mit einer Spannungsquelle (9) in Verbindung steht und Teil eines Schaltkreises (7, 8) bildet, der zum Auslösen eines Signals zum Abbrechen des Bearbeitungsvorganges dient, dadurch gekennzeichnet, daß mindestens ein Leiterbahnenpaar (2, 3) vorgesehen ist, dessen Leiterbahnen (2, 3) gegeneinander sowie nach außen und bei elektrisch leitendem Substrat auch gegen das Substrat selbst isoliert sind und von dem bzw. denen die jeweils eine Leiterbahn (3) Teil eines geschlossenen Schaltkreises (8) bildet, während die andere Teil (2) eines offenen Schaltkreises (7) bildet, und daß das zur Verminderung der Werkzeugbelastung und/oder zum Abbruch des Arbeitsvorganges dienende Signal dann entsteht, wenn entweder die Leiterbahn im geschlossenen Schaltkreis unterbrochen oder die Leiterbahn im offenen Schaltkreis nach dem Abtragen der Isolierschicht oder bei Bruch durch Brückenbildung geschlossen wird.

3. Werkzeug nach Anspruch 2, dadurch gekennzeichnet, daß die Leiterbahnen (2, 3) in elektrisch nichtleitenden Überzugsschichten einer Hartmetallwendeschneidplatte eingebettet sind.

4. Werkzeug nach Anspruch 3, dadurch gekennzeichnet, daß die beiden Leiterbahnen (2, 3) dicht nebeneinander angeordnet sind.

5. Werkzeug nach Anspruch 3, dadurch gekennzeichnet, daß die beiden Leiterbahnen (2, 3) dicht übereinander angeordnet sind.

6. Werkzeug nach Anspruch 3, dadurch gekennzeichnet, daß die Leiterbahn (3) des offenen Stromkreises (7) vom Substrat gebildet wird, das mit der Spannungsquelle (9) in leitender Verbindung steht.

7. Werkzeug nach einem der Ansprüche 3 bis 6, dadurch gekennzeichnet, daß die Leiterbahnen (2, 3) zu Kontaktpunkten (A, B, C) in den Außenflächen der Wendeschneidplatten geführt werden, die auf Gegenkontakten im Schneidplattenträger aufliegen.

8. Werkzeug nach einem der Ansprüche 3 bis 7, dadurch gekennzeichnet, daß die elektrisch nichtleitenden Schichten aus elektrisch nichtleitenden Hartstoffen, wie Aluminiumoxid, Aluminiumnitrid oder Siliziumnitrid, bestehen.

9. Werkzeug nach einem der Ansprüche 3 bis 8, dadurch gekennzeichnet, daß die Leiterbahnen (2, 3) aus elektrisch leitenden weichen Materialien oder Hartstoffen, wie Titancarbid oder Titannitrid, bestehen.

10. Werkzeug nach einem der Ansprüche 3 bis 9, dadurch gekennzeichnet, daß die elektrisch nichtleitenden Schichten und/oder die Leiterbahnen im PVD-(Physical Vapour Deposition) oder CVD-(Chemical Vapour Deposition) Verfahren hergestellt sind.

11. Werkzeug nach einem der Ansprüche 3 bis 9, dadurch gekennzeichnet, daß die Leiterbahnen (2, 3) in Dünnschichttechnik hergestellt sind.

12. Werkzeug nach einem der Ansprüche 3 bis 9, dadurch gekennzeichnet, daß die Leiterbahnen (2, 3) im Siebdruck hergestellt sind.

13. Werkzeug nach einem der Ansprüche 2 bis 12, dadurch gekennzeichnet, daß die Leiterbahnen (2, 3) entlang der Hauptschneiden angeordnet sind.

14. Werkzeug nach einem der Ansprüche 2 bis 12, dadurch gekennzeichnet, daß die Leiterbahnen (2, 3) entlang der Nebenschneiden angeordnet sind.

15. Werkzeug nach einem der Ansprüche 3 bis 14, dadurch gekennzeichnet, daß für jede Arbeitsposition der Schneidplatte (1) voneinander unabhängige Leiterbahnenpaare angeordnet sind.

16. Werkzeug nach einem der Ansprüche 3 bis 15, dadurch gekennzeichnet, daß an den Schneidkanten mehrere zu offenen und geschlossenen Schaltkreisen (7, 8) gehörende Schaltkreise in vorbestimmtem Abstand so angeordnet sind, daß beim Trennen bzw. Schließen der Schaltkreise unterschiedliche Schaltimpulse entstehen.

## Claims

1. A method of detecting limit wear and/or cutting edge breakage in tools having at least one insulated strip conductor (2, 3) which is embedded in the cutting material or the wearing material, for example, in the cutting plate (1) and is connected to a voltage source (9) and forms part of a circuit (7, 8) delivering a signal to discontinue the machining process, characterized in that at least one pair of strip conductors (2, 3) is provided, whose strip conductors (2, 3) are insulated against one another and in the outward direction, and also against the substrate itself in the case of an electrically conductive substrate, a strip conductor (3) of one of the pairs forming part of a closed circuit (8), while the other conductor strip forms part (2) of an open circuit (7), and a signal to reduce tool loading and/or to discontinue the machining process is delivered either when the conductor strip in the closed circuit is interrupted or when the strip conductor in the open circuit is closed by bridge formation after the erosion of the insulating layer, or if breakage occurs.

2. A tool having a device for detecting limit wear and/or cutting edge breakage in tools having at least one strip conductor (2, 3) which is embedded in the cutting material, more particularly in a cutting plate (1), and is connected to a voltage source (9) and forms part of a circuit (7, 8) delivering a signal for the discontinuation of the machining process, characterized in that at least one pair of strip conductors (2, 3) is provided, whose strip conductors (2, 3) are insulated against one another and in the outward direction, and also against the substrate itself in the case of an electrically conductive substrate, a strip conductor (3) of one of the pairs forming part of a closed circuit (8), while the other conductor strip forms part (2) of an open circuit (7), and a signal to reduce tool loading and/or to discontinue the machining process is delivered either when the conductor strip in the closed circuit is interrupted or when the strip conductor in the open circuit is closed by bridge formation after the erosion of the insulating layer, or if breakage occurs.

3. A tool according to claim 2, characterized in that the strip conductors (2, 3) are embedded in electrically non-conductive coating layers of an indexable insert of a hard metal.

4. A tool according to claim 3, characterized in that the two conductor strips (2, 3) are disposed close beside one another.

5. A tool according to claim 3, characterized in that the two conductor strips (2, 3) are disposed close above one another.

6. A tool according to claim 3, characterized in that the conductor strip (3) of the open circuit (7) is formed by the substrate, which is conductively connected to the voltage source (9).

7. A tool according to one of claims 3 to 6, characterized in that the conductor strips (2, 3) extend to contact points (a, b, c) in the outer surfaces of the indexable inserts which bear against matching contacts in the cutting plate carrier.

8. A tool according to one of claims 3 to 7, characterized in that the electrically non-conductive layers consist of electrically non-conductive mechanically resistant materials, such as titanium carbide or titanium nitride.

9. A tool according to one of claims 3 to 8, characterized in that the strips (2, 3) consist of electrically conductive or mechanically resistant material, such as titanium carbide or titanium nitride.

10. A tool according to one of claims 3 to 9, characterized in that the electrically non-conductive layers and/or the conductor strips are produced by the PVD (physical vapour deposition) or CVD (chemical vapour deposition) processes.

11. A tool according to one of claims 3 to 9, characterized in that the conductor strips (2, 3) are produced by thin-layer technique.

12. A tool according to one of claims 3 to 9, characterized in that the conductor strips (2, 3) are produced by screen printing.

13. A tool according to one of claims 2 to 12, characterized in that the conductor strips (2, 3) are disposed along the main cutting edges.

14. A tool according to one of claims 2 to 12, characterized in that the conductor strips (2, 3) are disposed along the subsidiary cutting edges.

15. A tool according to one of claims 3 to 14, characterized in that pairs of conductor strips independent of one another are disposed for each operating position of the cutting plate (1).

16. A tool according to one of claims 3 to 15, characterized in that a number of circuits associated with open and closed circuits (7, 8) are so disposed spaced out on the cutting edges that differential switching pulses are produced when the circuits are opened and closed.

**Revendications**

1. Procédé pour détecter l'état d'usure limite ou la cassure de l'arête de coupe d'outils, comportant au moins une piste de conducteurs (2, 3) isolée, incorporée dans la matière de l'arête de coupe ou dans la matière d'usure, par exemple dans la plaquette de coupe (1), piste qui est reliée avec une source de tension et constitue une partie d'un circuit électrique (7, 8) qui sert à émettre un signal pour interrompre l'opération d'usinage, caractérisé en ce qu'au moins un couple de pistes conductrices (2, 3) est prévu, dont les pistes conductrices (2, 3) sont isolées entre elles ainsi que par rapport à l'extérieur et également, dans le cas d'un substrat conducteur de l'électricité, par rapport au substrat lui-même, et dont l'une des pistes conductrices (3) de ce couple, ou de ces couples, constitue chaque fois une partie d'un circuit électrique fermé (8) tandis que l'autre partie (2) constitue un circuit électrique ouvert (7), et en ce que le signal, servant à réduire la charge de l'outil ou à interrompre l'opération d'usinage, se produise soit lorsque la piste conductrice dans le circuit électrique fermé est interrompue, soit lorsque la piste conductrice dans le circuit électrique ouvert est fermée, par formation d'un court-circuit, après érosion de la couche isolante, ou lors d'une rupture.

2. Outillage comportant un dispositif pour détecter l'état d'usure limite ou la cassure de l'arête de coupe d'outils, comportant au moins une piste de conducteurs isolée incorporée dans la matière de l'arête de coupe ou dans la matière anti-usure, par exemple dans la plaquette de coupe, piste qui est reliée avec une source de tension et constitue une partie d'un circuit électrique qui sert à émettre un signal pour interrompre l'opération d'usinage, caractérisé en ce qu'au moins un couple de pistes conductrices (2, 3) est prévu, dont les pistes conductrices (2, 3) sont isolées entre elles ainsi que par rapport à l'extérieur et également, dans le cas d'un substrat conducteur de l'électricité, par rapport au substrat lui-même, et dont l'une des pistes conductrices (3) de ce couple, ou de ces couples, constitue chaque fois une partie d'un circuit électrique fermé (8) tandis que l'autre partie (2) constitue un circuit électrique ouvert (7), et en ce que le signal, servant à réduire la charge de l'outil ou à interrompre l'opération d'usinage, se produise soit lorsque la piste conductrice dans le circuit électrique fermé est interrompue, soit lorsque la piste conductrice dans le circuit électrique ouvert est fermée, par formation d'un court-circuit, après érosion de la couche isolante, ou lors d'une rupture.

3. Outillage suivant la revendication 2, caractérisé en ce que les pistes conductrices (2, 3) sont incorporées dans des couches de recouvrement non conductrices de l'électricité.

4. Outillage suivant la revendication 2, caractérisé en ce que les deux pistes conductrices (2, 3) sont disposées étroitement l'une à côté de l'autre.

5. Outillage suivant la revendication 2, caractérisé en ce que les deux pistes conductrices (2, 3) sont disposées étroitement l'une au dessus de l'autre.

6. Outillage suivant la revendication 2, caractérisé en ce que la piste conductrice (3) du circuit électrique ouvert (7) est constituée par le substrat, qui est relié électriquement à la source de tension (9).

7. Outillage suivant l'une quelconque des revendications 3 à 6, caractérisé en ce que les pistes conductrices (2, 3) sont raccordées à des points de contact (A, B, C) sur les faces externes des plaquettes de coupe réversibles, qui viennent s'appuyer sur les contacts conjugués des supports de plaquette de coupe.

8. Outillage suivant l'une quelconque des revendications 3 à 7, caractérisé en ce que les couches non conductrices de l'électricité sont constituées de matériaux durs non conducteurs de l'électricité, comme de l'oxyde d'aluminium, du nitrure d'aluminium ou du nitrure de silicium.

9. Outillage suivant l'une quelconque des revendications 3 à 8, caractérisé en ce que les pistes conductrices (2, 3) sont constituées de matériaux tendres, ou de matériaux durs, conducteurs de l'électricité, comme du carbure de titane ou du nitrure de titane.

10. Outillage suivant l'une quelconque des revendications 3 à 9, caractérisé en ce que les couches non conductrices de l'électricité et/ou les pistes conductrices sont fabriquées suivant le procédé PVD (Physical vapour deposition) ou le procédé CVD (Chimical vapour deposition).

11. Outillage suivant l'une quelconque des revendications 3 à 9, caractérisé en ce que les pistes conductrices (2, 3) sont fabriquées suivant la technique des couches minces.

12. Outillage suivant l'une quelconque des revendications 3 à 9, caractérisé en ce que les pistes conductrices (2, 3) sont fabriquées suivant le procédé sérigraphique.

13. Outillage suivant l'une quelconque des revendications 2 à 12, caractérisé en ce que les pistes conductrices (2, 3) sont disposées le long des arêtes de coupe principales.

14. Outillage suivant l'une quelconque des revendications 2 à 12, caractérisé en ce que les pistes conductrices (2, 3) sont disposées le long des arêtes de coupe secondaires.

15. Outillage suivant l'une quelconque des revendications 3 à 14, caractérisé en ce que sont disposés des couples de pistes conductrices, indépendants les uns des autres, pour chaque position de travail de la plaquette de coupe (1).

16. Outillage suivant l'une quelconque des revendications 3 à 15, caractérisé en ce que, sur les arêtes de coupe, à des distances pré-déterminées, plusieurs circuits électriques appartenant à des circuits électriques ouvert et fermé (7, 8) sont disposés de telle façon que, lors de l'ouverture ou de la fermeture des circuits électriques, il se produise des impulsions de commutation différenciées.

# FIG.1a

# FIG.1b

FIG.2

# FIG.3

EP 0 217 242 B1

# FIG. 4a

# FIG. 4b

FIG.5a

FIG.5b

FIG.5c

FIG.5d

FIG.5e

FIG.5f

FIG.5g

FIG.5h